# FASCICULE DE BREVET EUROPEEN

(11) **EP 2 949 627 B1**
(45) Date de publication et mention de la délivrance du brevet: **25.10.2017**
(21) Numéro de dépôt: 15169183.9
(22) Date de dépôt: 26.05.2015
(51) Int. Cl.: C02F 1/00, C02F 1/38, C02F 1/74, C02F 101/20, C02F 101/30, C02F 101/32, C02F 101/36, C02F 103/44

(54) **UNITÉ DE TRAITEMENT ET DE DÉPOLLUTION DE L'EAU USÉE**
EINHEIT ZUR BEHANDLUNG UND REINIGUNG VON ABWASSER
UNIT FOR TREATING AND PURIFYING WASTEWATER

(30) Priorité: 30.05.2014 FR 1454922
(43) Date de publication de la demande: 02.12.2015
(73) Titulaire: Nevez Marine Services, 29920 Nevez (FR)
(72) Inventeur: Morvan, Stéphane, 29920 Nevez (FR)
(74) Mandataire: Loyer & Abello

(56) Documents cités:
- US-A- 4 104 164
- US-A1- 2013 291 894

## Description

### Domaine technique de l'invention

L'invention se rapporte au domaine des systèmes de traitement des eaux de carénage. Elle se rapporte notamment à une unité de traitement des eaux de carénage débourbées.

### Etat de la technique

Le carénage est la série d'opérations de révision périodique de la coque d'un navire en vue de lui redonner ses qualités nautiques de vitesse, ainsi que dans le cas d'une coque métallique de limiter la corrosion. Il comporte le nettoyage de la coque sous la ligne de flottaison, et généralement le décapage des restes de peinture antisalissure, désignée généralement par antifouling en langue anglaise, et la remise en peinture. De telles peintures antisalissure contiennent des biocides destinés à empêcher les organismes aquatiques de se fixer sur la coque des navires.

Les déchets toxiques issus du carénage sont notamment : les MES, ou Matières En Suspension, des métaux et des micropolluants organiques. Ces déchets proviennent des écailles, poussières et particules produites par le carénage, par grattage, ponçage et lavage de l'ancienne couche de peinture antisalissure. En plus de ces déchets, des déchets d'hydrocarbures sont présents lorsque le chantier de carénage est utilisé également pour le dessalage des moteurs.
Plusieurs dizaines de molécules biocides peuvent être utilisées dans les peintures antisalissure et retrouvées dans l'eau sous forme de résidus, parmi lesquelles le cuivre, utilisé pour sa toxicité sur le phytoplancton et d'autres organismes, le zinc, etc.
Des organochlorés comptent également parmi les biocides relâchés dans l'eau. Parmi ces derniers, le diuron, ou dichlorophenyl dimethyl urée, est particulièrement difficile à éliminer des eaux de carénage.

Dans l'état de la technique, afin de traiter des eaux de carénage, il est connu des dispositifs tels qu'enseignés dans FR2909371.

Ces dispositifs comportent par exemple une cuve tampon, une cuve de décantation et une station de traitement de filtration comportant un sac contenant un substrat filtrant utilisant la gravité, puis un étage inférieur de filtration contenant un substrat à base de résine zéolithe.

Ces dispositifs présentent l'inconvénient de devoir changer régulièrement les filtres, car ils se colmatent.
Ces dispositifs présentent l'inconvénient de n'être pas efficaces pour la filtration des biocides, et donc de générer un problème écologique et environnemental.
Ces dispositifs présentent l'inconvénient de ne pas prévoir le traitement des déchets récupérés dans le sac filtrant ou les résines zéolithe.
Ces dispositifs présentent l'inconvénient de ne pas pouvoir filtrer de l'eau contenant du chlore, car le chlore détruit les résines zéolithe.

Le document US 4 104 164 concerne un système pour traiter les eaux usées des laveries ou des systèmes de nettoyage de voitures afin de récupérer les eaux savonneuses, les détergents et autres produits chimiques.

Le document US 2013/291894 concerne un système de lavage des poubelles.

### Objet de l'invention

Une idée à la base de l'invention est de réduire le coût d'entretien d'une station de traitement des eaux de carénage.
Une idée à la base de l'invention est d'améliorer l'efficacité d'une station de traitement des eaux de carénage.
Une idée à la base de l'invention est d'utiliser une centrifugeuse, notamment une centrifugeuse à gasoil vendue comme séparateur de phases liquides eau et gasoil, comme séparateur de phase solide-liquide pour séparer l'eau des boues qu'elle contient.

Une idée à la base de l'invention est de fournir un traitement des eaux usées qui produise des déchets facilement transportables et éliminables.

Un autre but de l'invention est de fournir un traitement des eaux de carénage efficace pour des chantiers situés en zone sensible sur le plan écologique, et pouvant traiter un grand nombre de bateaux par an, par exemple plus de 400 bateaux.

Selon un mode de réalisation, l'invention fournit une unité de traitement et de dépollution de l'eau usée comprenant :
- une entrée de l'unité de traitement pour recevoir de l'eau usée,
- un séparateur centrifuge comprenant
un bol de recueillement des boues et une chambre de recueillement de l'eau,
un gicleur monté mobile en rotation à l'intérieur du bol incluant une entrée de gicleur et une sortie de gicleur, l'entrée de l'unité de traitement communiquant avec l'entrée de gicleur,
la sortie du gicleur débouchant dans le bol de recueillement des boues,
un couvercle de bol séparant le bol de recueillement des boues de la chambre de recueillement de l'eau, un canal traversant le couvercle de bol pour rejeter l'eau débarrassée des boues dans la chambre de recueillement de l'eau,
une sortie du séparateur centrifuge communiquant avec la chambre de recueillement de l'eau, le séparateur centrifuge étant apte à séparer l'eau usée des boues qu'elle contient par centrifugation de l'eau chargée des boues présentant une densité supérieure à celle de l'eau sur les parois du bol de recueillement des boues,
- une pompe de refoulement pour aspirer l'eau traversant le séparateur centrifuge, comprenant une entrée de pompe et une sortie de pompe, l'entrée de pompe étant reliée à la sortie du séparateur centrifuge,
- un dispositif de filtration comprenant une entrée du dispositif de filtration, l'entrée du dispositif de filtration étant reliée à la sortie de pompe,
- une sortie de l'unité de traitement étant reliée à la sortie du dispositif de filtration.
Grâce à ces caractéristiques, il est possible de filtrer une eau débarrassée des plus grosses impuretés de façon à allonger la durée de vie des filtres plus fins placés en aval. Grâce à ces caractéristiques, les micro-polluants de densité supérieure à 1 peuvent être piégés dans les boues. Grâce à ces caractéristiques, les déchets du traitement de l'eau usée sont de volume réduit, facilement transportables et incinérables.

Selon l'invention, l'unité de traitement comprend en outre une pompe d'alimentation alimentant en eau l'entrée de l'unité de traitement à un débit d'alimentation, dans laquelle la pompe de refoulement aspire l'eau à un débit de refoulement, dans laquelle le débit d'alimentation est inférieur au débit de refoulement, afin que la pompe de refoulement aspire à la fois de l'eau et de l'air à travers le séparateur centrifuge. Grâce à ces caractéristiques, l'eau sale est oxygénée, ce qui améliore sa dépollution.

Selon d'autres modes de réalisation avantageux, une telle unité peut présenter une ou plusieurs des caractéristiques suivantes, seules ou prises en combinaison :

Selon un mode de réalisation, le dispositif de filtration comprend un premier filtre comprenant de la matière fibreuse. Grâce à ces caractéristiques, il est possible de filtrer une eau débarrassée des plus grosses impuretés de façon à allonger la durée de vie d'éventuels filtres plus fins placés en aval du premier filtre.

Selon un mode de réalisation, la pompe de refoulement est apte à engendrer une pression hydraulique poussant l'eau à traverser le premier filtre.

Selon un mode de réalisation, le premier filtre comprend un premier tube ayant une paroi cylindrique perforée et une première extrémité ainsi qu'une seconde extrémité, et la matière fibreuse formant une gaine tubulaire fibreuse autour du tube. Grâce à ces caractéristiques, les déchets du traitement de l'eau usée sont de volume réduit, facilement transportables et incinérables.

Selon un mode de réalisation, la gaine tubulaire fibreuse comprend un empilement de disques coaxiaux de matière fibreuse poinçonnés en leur centre et enfilés sur le tube.

Selon un mode de réalisation, le premier filtre comprend un premier dispositif de compression axiale exerçant une force de compression axiale sur la gaine tubulaire fibreuse à la première extrémité du premier tube, la première extrémité du premier tube étant bouchée de manière étanche, la gaine tubulaire fibreuse étant en butée sur une première rondelle enfilée sur la seconde extrémité du premier tube, la seconde extrémité du premier tube étant ouverte pour constituer un canal de passage de l'eau.

Selon un mode de réalisation, le premier dispositif de compression axiale comporte un ressort.

Selon un mode de réalisation, le ressort est comprimé entre d'une part une seconde rondelle en butée de la gaine tubulaire fibreuse et d'autre part une vis de serrage pour ajuster de la compression. Grâce à ces caractéristiques, la finesse de la filtration est réglable par le mécanicien du chantier.

Selon un mode de réalisation, le dispositif de filtration comprend deux chambres séparées par une cloison percée d'un trou dans lequel est fixé la seconde extrémité du premier tube constituant canal de passage d'eau, la première rondelle enfilée sur la seconde extrémité du premier tube étant comprimée entre la cloison et la gaine tubulaire fibreuse, de façon à ce que la première chambre communique avec la seconde chambre par l'intermédiaire du filtre, l'eau passant de la première chambre à la seconde en traversant radialement la gaine tubulaire fibreuse de l'extérieur vers l'intérieur via les perforations du premier tube, puis l'eau traversant le premier tube axialement jusqu'à déboucher dans la seconde chambre via la seconde extrémité du premier tube constituant canal de passage d'eau.

Selon un mode de réalisation, le dispositif de filtration comprend un second filtre en aval du premier filtre, le second filtre comprenant
un second tube ayant une paroi cylindrique perforée et une première extrémité ainsi qu'une seconde extrémité, et de la matière fibreuse formant une gaine tubulaire fibreuse autour du second tube, un second dispositif de compression axiale exerçant une force de compression axiale sur la gaine tubulaire fibreuse à la première extrémité du second tube, la première extrémité du second tube étant bouchée de manière étanche, la gaine tubulaire fibreuse étant en butée sur une première rondelle enfilée sur la seconde extrémité du second tube, la seconde extrémité du second tube étant ouverte pour constituer un canal de passage de l'eau, le dispositif de filtration comprenant en outre
une troisième chambre séparée de la seconde par une cloison percée d'un trou dans lequel est fixé la seconde extrémité du second tube constituant canal de passage d'eau, la première rondelle enfilée sur la seconde extrémité du second tube étant comprimée entre la cloison et la gaine tubulaire fibreuse, de façon à ce que la première chambre communique avec la seconde chambre par l'intermédiaire du filtre, l'eau passant de la seconde chambre à la troisième en traversant radialement la gaine tubulaire fibreuse de l'extérieur vers l'intérieur via les perforations du second tube, puis l'eau traversant le second tube axialement jusqu'à déboucher dans la troisième chambre via la seconde extrémité du second tube constituant canal de passage d'eau,
la compression axiale exercée sur la gaine tubulaire fibreuse autour du second tube par le second dispositif de compression axiale étant inférieure à la compression axiale exercée sur la gaine tubulaire fibreuse autour du premier tube par le premier dispositif de compression axiale, de façon à ce que la pression hydraulique engendrée par la pompe de refoulement pousse l'eau à traverser le deuxième filtre. Grâce à ces caractéristiques, le débit est conservé malgré la perte de charge en aval du deuxième filtre.

Selon un mode de réalisation, les disques coaxiaux de matière fibreuse sont des disques réalisés principalement en coton et convenant pour un usage cosmétique. Grâce à ces caractéristiques, le coût de remplacement de ces filtres lorsqu'ils sont usés est très faible comparativement au techniques de filtrage antérieures.

Il existe de nombreuses technologies de pompes de refoulement pouvant être utilisées dans l'unité de traitement et de dépollution selon l'invention. Selon des modes de réalisations, la pompe de refoulement est une pompe centrifuge ou une pompe volumétrique. La pompe de refoulement peut être sélectionnée dans la liste comprenant : pompe à pistons axiaux, pompe à plateau oscillant, pompe à pistons axiaux à axe droit, pompe à axe brisé, pompe à pistons radiaux, pompe péristaltique, pompe à palette, pompe à rotor, pompe à engrenage, pompe à vis sans fin, à membrane ou à lobes.
Selon un mode de réalisation, la pompe de refoulement est une pompe à rotor à ailettes flexibles, les ailettes flexibles étant aptes à s'effacer quand la pression en aval de la pompe de refoulement dépasse un seuil. Grâce à ces caractéristiques, le débit de la station de traitement est variable et proportionnel à l'encrassement des filtres.
Selon un mode de réalisation préférentiel, la pompe de refoulement est une pompe à plateau oscillant. Grâce à ces caractéristiques, la pression de la station de traitement est augmentée.
Selon un mode de réalisation, l'unité de traitement et de dépollution comporte en outre des clapets anti-retour. Les clapets anti-retour ont notamment pour effet d'empêcher le retour de l'eau dans la chambre de recueillement de l'eau du séparateur centrifuge lors de l'arrêt de l'aspiration de la pompe de refoulement.
Selon un mode de réalisation, le rotor à ailettes comprend du caoutchouc. Grâce à ces caractéristiques, la pompe peut aspirer à la fois de l'eau et de l'air.

Selon un mode de réalisation, le dispositif de filtration comprend un filtre comprenant du charbon actif. Grâce à ces caractéristiques, l'eau traversant ce filtre est débarrassée des micro particules de pollution les plus fines. Un tel filtre est particulièrement avantageux car il résiste au chlore, contrairement, par exemple, aux filtres à base de résines zéolithes.

Selon un mode de réalisation, le filtre à charbon actif est en aval du premier filtre. Grâce à ces caractéristiques, le filtre à charbon actif ne se colmate pas.
Selon un mode de réalisation, le filtre à charbon actif est en aval du second filtre. Grâce à ces caractéristiques, le filtre à charbon actif ne se colmate pas.

Selon un mode de réalisation, le dispositif de filtration comprend un filtre ultra-violet en aval du filtre comprenant du charbon actif. Grâce à ces caractéristiques, l'unité de traitement et de dépollution permet de réduire la pollution bactériologique de l'eau.
Selon un mode de réalisation, le dispositif de filtration comprend une pompe doseuse de produit désinfectant en aval du filtre ultra-violet. Grâce à ces caractéristiques, l'unité de traitement et de dépollution permet de réduire davantage la pollution bactériologique de l'eau dans le but d'un recyclage possible en circuit fermé de l'eau dépolluée.

Selon un mode de réalisation, l'unité de traitement comporte en outre un pressostat connecté en aval de la pompe de refoulement, dans laquelle le pressostat est configuré pour arrêter l'aspiration de la pompe de refoulement en réponse à la détection que le débit de refoulement dépasse un seuil prédéterminé.
Selon un mode de réalisation, l'unité de traitement comporte en outre un coup de poing de sécurité connecté à une unité d'asservissement électrique de l'unité de traitement et de dépollution. Le coup de poing de sécurité est configuré pour arrêter l'alimentation de la pompe d'alimentation et/ou l'aspiration de la pompe de refoulement en réponse à une action manuelle d'un utilisateur.
Selon un mode de réalisation, l'unité de traitement comporte en outre au moins une sonde de contrôle de pression. Ladite au moins une sonde de contrôle de pression est apte à contrôler le débit de refoulement de la pompe de refoulement et/ou une pression en amont du premier filtre et/ou en aval du premier filtre.
Selon un mode de réalisation, ladite au moins une sonde de contrôle de pression est apte à commander l'arrêt de l'unité de traitement en réponse à un contrôle du débit de refoulement de la pompe de refoulement et/ou de la pression en amont du premier filtre et/ou en aval du premier filtre supérieur à un débit seuil et/ou une pression seuil. Par exemple, ladite au moins une sonde de contrôle de pression est apte à arrêter une alimentation électrique générale de l'unité de dépollution et de filtration. Selon un mode de réalisation, le débit seuil et/ou la pression seuil correspond à un débit et/ou à une pression de colmatage d'au moins un filtre du dispositif de filtration. Grâce à ces caractéristiques, l'unité de traitement est sécurisée en ce que le débit et/ou la pression ne peut pas dépasser le débit et/ou la pression de colmatage. Selon un mode de réalisation, l'unité de traitement comporte en outre un automate connecté à ladite au moins une sonde de contrôle de pression, l'automate étant apte à contrôler à distance ladite au moins une sonde de contrôle de pression par Global System for Mobile Communications (GSM). Selon un mode de réalisation, l'automate est configuré pour contrôler ladite au moins une sonde de contrôle de pression pendant des plages horaires préconfigurées.

Selon un mode de réalisation, l'invention fournit une utilisation d'une unité de traitement et de dépollution de l'eau usée selon l'invention, dans laquelle l'eau usée est issue d'un chantier de carénage. Grâce à ces caractéristiques, les matières en suspension, les métaux lourds, les hydrocarbures et les polluants des peintures antisalissure présents dans l'eau usée de carénage sont filtrés.

Selon un mode de réalisation, l'invention fournit un conteneur mobile contenant l'unité de traitement selon l'invention. Grâce à ces caractéristiques, la station de traitement et de dépollution est mobile, adaptable et de maintenance faisable par un mécanicien du chantier de carénage.

Selon un mode de réalisation, le conteneur comprend un système de chauffage. Cette caractéristique permet d'éviter le gel de l'eau traitée.
Selon un mode de réalisation, le conteneur comprend un système d'isolation sonore. Cette caractéristique permet le confort auditif du mécanicien du chantier.

Selon un mode de réalisation, l'invention fournit un système de traitement comprenant une l'unité de traitement selon l'invention et un débourbeur et/ou une cuve de décantation disposé en amont de l'unité de traitement. Grâce à ces caractéristiques, les plus grosses boues sont éliminées avant que l'eau usée les contenant ne soit filtrée par les filtres plus fins de l'unité de traitement.

Selon un mode de réalisation, le système de traitement selon l'invention comprend en outre une vanne trois-voies en aval de la pompe de refoulement,
la première voie étant reliée à la sortie de la pompe, la seconde voie étant reliée à l'entrée du dispositif de filtration et la troisième voie débouchant dans la cuve de décantation, la vanne trois-voies permettant de relier sélectivement la première voie avec l'une des deuxième voie ou troisième voie de façon exclusive,
pour permettre quand la vanne trois-voie relie la première voie avec la seconde voie de procéder à un traitement des eaux usées, et quand la vanne trois-voie relie
la première voie avec la troisième voie, introduire de l'eau de nettoyage dans la cuve de décantation, de façon à ce que l'eau de nettoyage circule alors en circuit fermé entre la cuve de décantation et le séparateur centrifuge qui en extrait les boues. Grâce à ces caractéristiques, la cuve de décantation peut-être nettoyée sans vidange donc sans surcoût ni pollution supplémentaire.

Selon un mode de réalisation, l'invention fournit un procédé de traitement et de dépollution de l'eau comprenant
collecter l'eau usée dans une cuve de décantation en amont de l'unité de traitement, envoyer l'eau sous pression dans l'unité de traitement dont la pompe de refoulement engendre une pression hydraulique poussant l'eau à traverser le dispositif de filtration et dont le séparateur centrifuge sépare l'eau usée des boues qu'elle contient par centrifugation de l'eau chargée des boues présentant une densité supérieure à par celle de l'eau sur les parois du bol de recueillement des boues. Ce procédé permet notamment d'éliminer les micro-polluants les plus tenaces, tels par exemple le diuron.

Selon un mode de réalisation, l'invention fournit un filtre comprenant un premier tube ayant une paroi cylindrique perforée et une première extrémité ainsi qu'une seconde extrémité, et de la matière fibreuse formant une gaine tubulaire fibreuse autour du tube.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux figures annexées.

Sur ces figures :
- La figure 1 est un schéma fonctionnel d'une chaine de traitement des eaux de carénage selon un mode de réalisation;
- La figure 2 est un schéma en écorché du puisard utilisable dans la chaîne de traitement de la figure 1;
- La figure 3 est un schéma d'une station de traitement selon un mode de réalisation logé dans une armoire;
- La figure 4 est un schéma en coupe vertical d'un séparateur centrifuge utilisable dans la station de traitement de la figure 3 ;
- La figure 5 est un schéma en coupe horizontal d'une pompe à rotor en caoutchouc destinée à effectuer l'aspiration de l'eau et de l'air du séparateur centrifuge décrit dans la figure 3 ;
- La figure 6 est un schéma d'un étage de filtration réalisé avec des filtres tubulaires en coton.

### Description détaillée de modes de réalisation

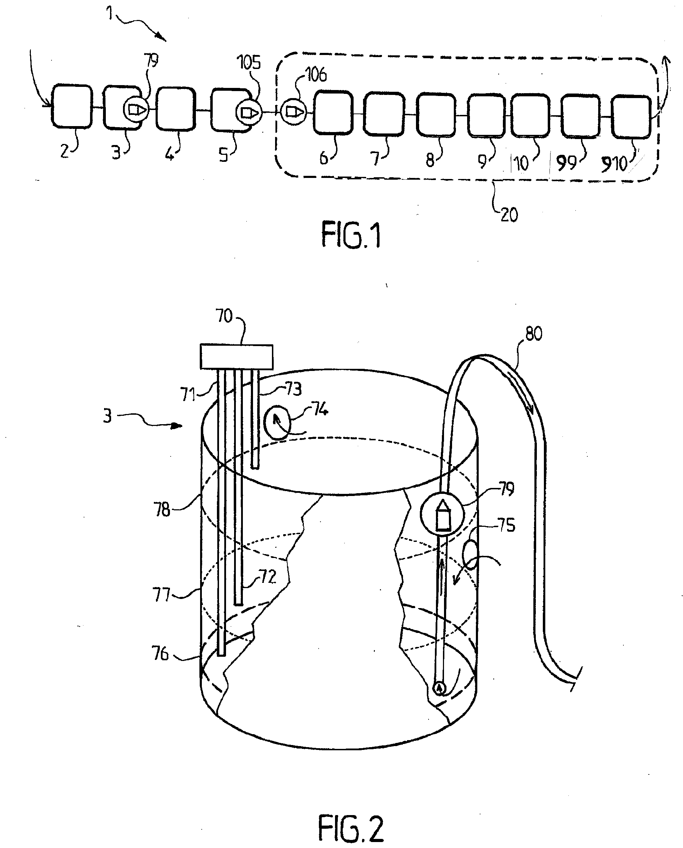

Un mode de réalisation d'une chaîne de traitement des eaux usées va être présenté en référence à la Figure 1. Une chaine de traitement des eaux de carénage 1 comprend une dalle 2 de récupération des eaux de carénage coulée en béton pour former des pentes descendant vers un regard central portant des filtres tamis concentriques. Ces filtres sont des filtres de pré-traitement qui sont destinés à récupérer les plus grosses particules de peintures et les autres résidus solides plus volumineux. Par exemple, une grille peut être utilisée avec une maille d'environ 1 à 10 cm. Le regard central est relié par un conduit à un puisard 3 comportant une pompe de relevage 79. Le puisard 3 est relié à un débourbeur 4 via la pompe de relevage 79 et un conduit. Le débourbeur 4 a également une fonction de déshuileur par gravité. Le débourbeur 4 est relié à une cuve tampon 5 équipée d'une pompe de gavage 105 et d'un conduit de sortie relié à une pompe de pressurisation 106 et à une centrifugeuse 6. La centrifugeuse 6 est reliée par un conduit à une série d'étage de filtres 7, 8, 9 et 10 communiquant entre eux par des conduits et dont le dernier débouche sur le réseau pluvial. 500 à 600 litres d'eau sont nécessaires pour caréner un bateau.

Le procédé permettant de traiter et dépolluer les eaux de carénage à l'aide de la chaine de traitement des eaux de carénage 1 va être décrit en référence aux Figure 1 et 2.

L'eau de carénage est recueillie pendant le carénage sur la dalle 2 et amenée par gravité par les pentes au regard central qui conduit à un puisard enterré 3 de 200 litres via un conduit d'arrivée d'eau 75. Le puisard enterré 3 a une capacité de 200 litres et est équipé d'une pompe de relevage 79 à démarrage automatique et d'un trop plein 74 pour pluie d'orage. Ce trop-plein 74 consiste en un orifice en bordure du puisard qui permet à l'eau d'orage de s'échapper sans passer par le système de filtration.

Le niveau d'eau est détecté à l'aide de trois barreaux métalliques 71, 72 et 73 en cuivre, placés à la verticale et s'étendant depuis le bord extérieur supérieur du puisard enterré 3 jusqu'à trois niveaux différents de profondeur à l'intérieur du puisard enterré 3. Le premier barreau 71 est un palpeur de fond, qui s'étend jusqu'au fond de façon à être constamment immergé sous un niveau d'eau résiduel 76. Le second barreau 72 est un détecteur de niveau bas 77, qui s'étend moins profondément, et le troisième 73 un détecteur de niveau haut 78, qui s'étend encore moins profondément, et dont l'extrémité inférieure est située plus bas que l'orifice du trop-plein 74. La différence de potentiel respectivement mesurée entre le palpeur de fond 71 et le détecteur de niveau haut 78, et respectivement le palpeur de fond 71 et le détecteur de niveau bas 77 par une unité électrique 70, renseigne sur le niveau d'eau. La détection de présence d'eau dépassant le niveau haut 78 déclenche automatiquement le fonctionnement de la pompe de relevage automatique 79 de façon à ce que l'eau du puisard soit aspirée et communiquée au débourbeur 4 via un conduit 80. La détection de présence d'eau dépassant le niveau bas 77 déclenche automatiquement l'arrêt du fonctionnement de la pompe de relevage automatique 79.
Le débourbeur 4 a une capacité de 900 litres dont 90 litres de récupération des hydrocarbures. Les hydrocarbures récupérés lors du débourbage sont stockés dans un fût dédié. Une vidange du débourbeur est à prévoir annuellement. Les plus grosses boues sont plus denses que l'eau sale et sont donc retenues au fond du débourbeur 4 pendant que l'eau sort par gravité pour être recueillie dans une cuve tampon 5 d'alimentation en eau de la station de traitement 20. Cette cuve tampon 5 de 3000 à 5000 litres permet à l'eau sale de décanter et est équipée d'une pompe immergée de gavage 105 pour l'alimentation hydraulique de la station de traitement 20. L'eau de la cuve tampon 5 est chargée en boues, c'est-à-dire des matières en suspension MES, jusqu'à 200 à 250 mg de boues par litre. La cuve tampon 5 est équipée d'un système de détection des niveaux d'eau similaire à celui du puisard enterré 3.
Ainsi, l'eau de la cuve tampon 5 est envoyée sous basse pression constante vers le système de filtration finale, la station de traitement 20.
La station de traitement 20 a une capacité de traitement de 180 litres d'eau sale par heure. La station de traitement est équipée d'une pompe 106 de pressurisation de façon à ce que l'eau sale arrive dans la centrifugeuse sous une pression contrôlée de 2 bars. La pompe 106 prend le relai de la pompe de gavage 105 de la cuve tampon 5. L'eau traitée par la station de traitement 20 traverse successivement une centrifugeuse 6 et des étages de filtres tubulaires 7, 8 en coton, puis des étages de filtres à charbon actif 9, 10. La centrifugeuse 6 permet d'extraire de l'eau usée de la cuve tampon 5 une grande partie des boues qu'elle contient. En sortie de la centrifugeuse, l'eau comporte encore 40 mg de boues résiduelles par litre d'eau usée. En sortie des étages de filtres tubulaires 7, 8, qui sont montés en série, l'eau usée sort avec 5 mg de pollution et de particules résiduelles par litre. En sortie des étages de filtres à charbon actif 9, 10, l'eau est propre à être rejetée dans le réseau d'eau pluviale.
Selon un mode de réalisation, la station de traitement 20 comprends en outre un filtre ultra-violet 99 en aval des étages de filtres à charbon actif 9, 10. Ce filtre ultra-violet 99 permet de réduire la pollution bactériologique. Par ailleurs, une pompe doseuse 910 de produit désinfectant peut être placée en aval du filtre ultra-violet afin de compléter la dépollution bactériologique, dans l'éventualité d'un recyclage de l'eau en circuit fermé.

Le tableau 1 illustre les résultats du traitement obtenu sur l'eau de carénage par la chaine de traitement complète. Par comparaison, le tableau 2 récapitule les taux de pesticides, métaux lourds et hydrocarbures qui ont été relevés avant le traitement de l'eau de carénage par la chaine de traitement.

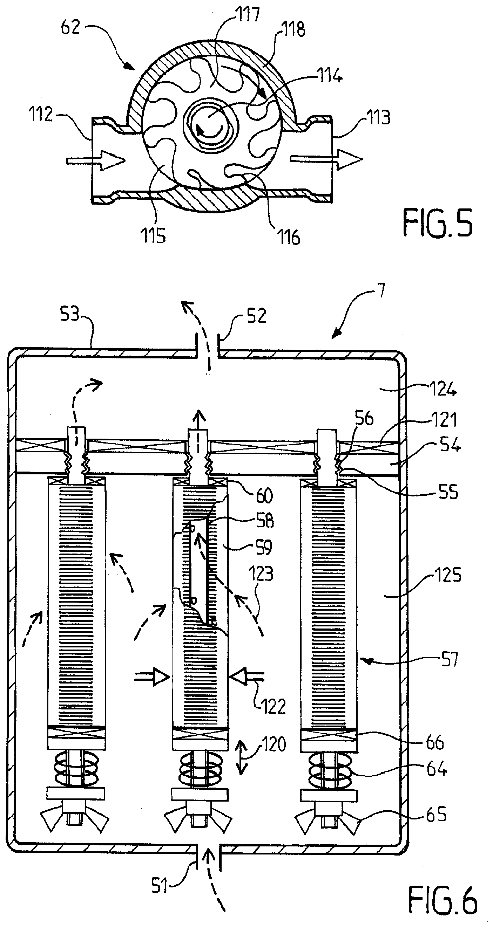

Pour les paramètres analysés, les concentrations mesurées en sortie de l'installation de traitement sont extrêmement faibles et inférieures aux valeurs guides, lorsqu'elles existent. Ces valeurs guides correspondent à des normes françaises (NF).
Un des polluants anti-algue, le diuron, très présent dans les antifouling et particulièrement difficile à éliminer, n'est plus présent qu'à l'état de traces, soit 0.074 µg/L. Ce résultat s'explique par la densité égale à 1.5 du diuron, supérieure à celle de l'eau. Cette densité permet qu'une partie du diuron soit piégée dans les boues retenues par la centrifugeuse 6. Le reste du diuron en dilution dans l'eau est filtré par les étages de filtres à charbon actif 9, 10. Ainsi, l'action combinée de la centrifugeuse 6 et des étages de filtres à charbon actif 9, 10 permet que l'eau qui est rejetée en milieu naturel en sortie de la station de traitement 20 soit débarrassée à 99 % de ses polluants et débarrassée des boues, métaux et pesticides encore présents en entrée de la station de traitement 20.
L'efficacité de la station de traitement 20 est notamment due à la présence de la centrifugeuse 6 en amont des filtres. Par comparaison, l'eau de rejet d'un processus de filtration lamellaire comprend entre 38 mg/L et 100mg/L de matière en suspension MES, alors qu'en sortie de la centrifugeuse 6 selon le processus décrit, l'eau de rejet en contient toujours 40mg/L.
L'eau en sortie de la station de traitement présente également des valeurs de Demande Chimique en Oxygène DCO et de Demande Biologique en Oxygène DBO très faibles, inférieur à 30 mg O₂/L pour la DCO et de l'ordre de 4 mg O₂/L pour la DBO. La DCO et la DBO sont des indices mesurables de la pollution d'une eau. Plus leur valeur est faible, moins l'eau est polluée.
L'efficacité de de la station de traitement 20 est notamment due à la centrifugeuse 6 dont les différents éléments permettent une oxygénation de l'eau sale, ce qui est décrit plus en détail en référence à la figure 5.

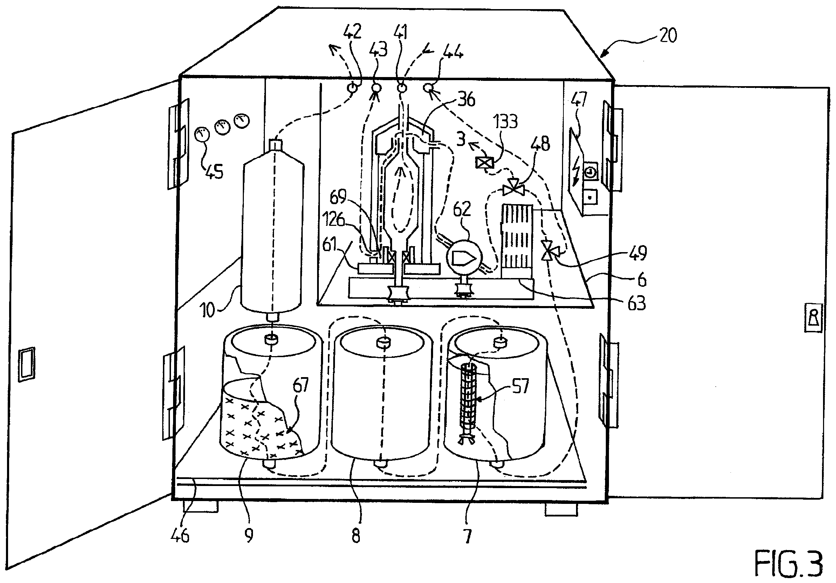

A présent, la station de traitement 20 permettant d'obtenir ces résultats va être décrite plus en détail, en référence à la figure 3.
La station de traitement 20 est conçue comme une unité indépendante, mobile, dont tous les éléments sont placés dans une même armoire en métal sur des étagères. Cette armoire a un volume transportable, de 1.50 m de hauteur, 1.50m de largeur et 0.90 m de profondeur. L'étagère 46 supporte les étages de filtres et est montée mobile en translation de façon à faciliter la maintenance de la station de traitement 20, notamment le remplacement des filtres usés. Les cuves des étages de filtration 7, 8, 9 et 10 représentées sont munies de poignées de préhension pour en faciliter le déplacement lors de la maintenance.
Le parcours de l'eau à travers les différents éléments composant la station de traitement 20 est représenté en pointillé.
L'eau sale arrive sous pression par la voie d'entrée 41 de la station de traitement 20. Elle passe tout d'abord par la centrifugeuse 6 constituée d'un séparateur centrifuge 61, d'une pompe à rotor 62 d'extraction du séparateur centrifuge 61 et d'un moteur 63. Le moteur 63 tourne à 1500 tours/min et entraine par un jeu de poulies et de courroies respectivement la pompe à rotor 62 à 1800 tours/minutes et le séparateur centrifuge 61 à 8000 tours/minutes. En effet, les poulies du séparateur centrifuge et du moteur 63 sont reliées par une première courroie, et les poulies de la pompe à rotor 62 et du moteur 63 sont reliées par une seconde courroie. La poulie du séparateur centrifuge a un diamètre inférieur à celui de la poulie du moteur 63, ce qui permet que la vitesse de rotation du séparateur centrifuge 61 soit plus élevée que celle du moteur 63. Le même principe s'applique pour le rotor de la pompe à rotor 62.
L'eau sale passe de la voie d'entrée 41 à l'intérieur du séparateur centrifuge 61 par un tuyau. Le séparateur centrifuge 61 en rotation collecte alors le plus gros des boues et particules en suspension dans l'eau sale le traversant. L'eau débarrassée des boues est recueillie dans une chambre 36 de recueillement de l'eau. En sortie du séparateur centrifuge 61, l'eau est encore chargée de 40 mg / litre de matières en suspension, ou MES, quel que soit son chargement en boues en entrée du séparateur centrifuge 61.
L'eau traverse le séparateur centrifuge 61 car elle est aspirée par une pompe à rotor 62, dans laquelle elle circule, comme indiqué par le trajet de l'eau en pointillé.
A la sortie du séparateur centrifuge 61, l'eau passe par une série de deux étages de filtres tubulaires 7, 8 pour éliminer les dernières boues. Les deux étages de filtres tubulaires 7, 8 sont similaires et montés en série. Le premier étage de filtre tubulaire 7 est représenté en écorché pour montrer un des éléments tubulaires 57 dans la cuve de l'étage de filtre tubulaire 7. Chacune des cuves des deux étages de filtres tubulaires 7, 8 contient 14 éléments tubulaires 57 tels que celui représenté. L'eau finit son parcours de filtration en passant dans deux étages de filtres à charbon actif 9, 10. Un premier étage de filtre 9 est un lit de charbon actif de 35 litres pour traitement des métaux lourds, un second étage de filtre est un filtre à charbon actif de 90 litres pour traitement des pesticides. Le choix de placer les étages de filtres à charbon actif en fin de chaine de traitement permet d'allonger la durée de vie des charbons actifs. En effet, la surface portante des grains de charbon actif 67 est grande proportionnellement à leur volume, mais si l'eau passant à travers est encore chargée en boues, alors le grain de charbon actif peut se retrouver enrobé de boues, c'est-à-dire colmaté. Quand le charbon actif est colmaté, il ne filtre plus l'eau car l'eau ne peut plus traverser les grains de charbon actif 67. Pour éviter le colmatage, il est utile de supprimer de l'eau un maximum de boues en amont des filtres à charbon actif. Ainsi, la durée de vie des filtres à charbons actifs est améliorée. La centrifugeuse 6 permet de supprimer la plus grosse part de ces boues et donc d'améliorer la durée de vie des charbons actifs. Les deux étages de filtres tubulaires à coton 7, 8 y contribuent également.

La station de traitement 20 comporte en plus trois manomètres de pression 45 pour le contrôle d'encrassement des filtres. Le premier manomètre mesure la pression directement en aval de la pompe 62. Il permet de contrôler la pression de refoulement de la pompe à rotor 62. La pompe à rotor 62 se désamorce automatiquement lorsque la pression excède 1.4 bar. C'est le cas lorsque les filtres tubulaires 57 sont encrassés et doivent être changés. Le second manomètre mesure la pression directement en aval du premier étage de filtres tubulaires 8. Par comparaison entre le premier et le deuxième manomètre, on peut connaître la différence de pression entre les entrées du premier étage de filtres tubulaires 7 et du second étage de filtres tubulaires 8. La différence de pression renseigne sur l'état d'encrassement du premier étage de filtres tubulaires à coton 7. Le troisième manomètre est monté directement en amont du premier des deux étages de filtres à charbon actif 9, 10. Il permet de contrôler l'état de colmatage des grains de charbon actif 67. Le troisième manomètre est utile par simple précaution, car le colmatage est très rare. En effet, d'une part les deux étages de filtres à charbon actif 9, 10 reçoivent une eau relativement claire, c'est-à-dire dont le taux de Matière En Suspension MES est relativement faible, de l'ordre de 5 mg/L, grâce à la centrifugeuse 6 et au deux étages de filtres tubulaires 7, 8, et d'autre part le volume des cuves des deux étages de filtres à charbon actif 9, 10 est tel que le charbon actif peut filtrer efficacement 200 000 litres d'eau usée en fin de la chaîne de traitement complète.
La station de traitement 20 est dotée d'un appareil électrique d'asservissement 47 qui commande électriquement la pompe de pressurisation 106, représentée sur la figure 1, une électrovanne 133 ainsi que le moteur 63 de la centrifugeuse. Le moteur 63 entraine à la fois la pompe à rotor 62 et le séparateur centrifuge 61.
La station de traitement 20 est également dotée d'une vanne trois-voies 49. La vanne trois-voies 49 a un conduit d'entrée, un conduit de sortie et un troisième conduit. La vanne trois-voies fonctionne de la façon suivante : en fonction du réglage, l'eau arrivant par le conduit d'entrée sort exclusivement soit par le conduit de sortie, soit par le troisième conduit.

La station de traitement 20 est également dotée d'un raccord en forme de T 48 faisant la jonction entre la pompe à rotor 62 et la vanne trois-voie 49. Un capillaire d'égalisation de pression est connecté au raccord 48 et porte une électrovanne 133. Ce capillaire débouche, en aval de l'électrovanne 133, sur une entrée d'eau du puisard 3. L'état ouvert ou fermé de l'électrovanne 133 est commandé par alimentation électrique.
L'électrovanne 133 est fermée dès le démarrage de la station de traitement 20 et pendant toute la période de fonctionnement grâce à l'asservissement électrique programmé dans l'appareil électrique d'asservissement 47. L'électrovanne 133 est ouverte lors de la mise à l'arrêt de la station de traitement 20 pour évacuer la pression résiduelle en aval de la pompe 62. Lorsque l'électrovanne 133 est ouverte, le capillaire permet d'évacuer l'eau et l'air sous pression en aval de la pompe à rotor 62 vers le puisard 3. L'évacuation de la pression est nécessaire avant le redémarrage de la station de traitement 20 pour équilibrer la pression de la pompe de gavage de la cuve tampon avec la pression de refoulement de la pompe à rotor. En effet, la pression résiduelle qui existe en aval de la pompe à rotor, dans les étages de filtration, lors de l'arrêt de la station de traitement 20, pourrait empêcher de réamorcer le traitement si on la laissait subsister. Cette pression résiduelle forme une poche d'air en entrée et en sortie de la pompe à rotor. Il faut donc éliminer cette pression résiduelle avant le redémarrage. Cette dépressurisation permet également de provoquer l'assèchement de la chambre de recueillement de l'eau 36. De plus, le léger reflux d'eau dans les étages de filtration lors de l'ouverture de l'électrovanne 133 présente l'avantage de laver les filtres à contre-courant et ainsi de faire tomber une partie des boues dans le fond de la cuve 53.

Le séparateur centrifuge 61 est également dotée d'un drain récupérateur 69 de sécurité qui permet de renvoyer au puisard 3 l'eau sale via l'évacuation de drain 127 dans le cas où l'eau sale s'échapperait par le jour 127 par suite d'un mauvais fonctionnement du séparateur centrifuge 61, notamment lors du démarrage et de l'arrêt du moteur entrainant la rotation.

La vanne trois-voies 49 permet l'auto nettoyage de la cuve tampon par aspiration de l'eau de la cuve tampon par l'entrée 41, passage dans le séparateur centrifuge 61 de l'eau de nettoyage de la cuve tampon 5 et retour à la cuve tampon 5 via la voie de rejet de l'eau d'auto nettoyage 44 reliée au troisième conduit de la vanne trois-voies 49. Les boues de la cuve tampon 5 sont mises préalablement en suspension dans l'eau par jet d'eau sous haute pression et la pompe de pressurisation 106 de la centrifugeuse 61 est activée lors de ce nettoyage de la cuve tampon 5. L'eau de la cuve tampon 5 à nettoyer est chargée à hauteur de 200-250 mg de boues par litre en début de processus d'auto-nettoyage. En sortie de la centrifugeuse 61, l'eau est toujours chargée de 40 mg de boues par litre. Ainsi, une circulation de l'eau boueuse en circuit fermé pendant 5h à 6h entre la centrifugeuse 61 et la cuve tampon 5 permet d'obtenir dans la cuve tampon 5 une eau chargée de boues à 80-100 mg/L.

La station de traitement 20 est également dotée d'un capillaire de prise d'eau en sortie, non représenté, pour recueillir des échantillons d'eau traitée afin de contrôler la qualité du traitement. La station de traitement 20 débouche sur une sortie 42. Cette sortie permet l'écoulement des eaux traitées directement dans le réseau d'eau pluviale.

L'armoire de la station de traitement 20 présente les avantages d'être facilement déplaçable de par son volume et sa disposition, et d'une maintenance simple, accessible au mécanicien qui effectue le carénage.

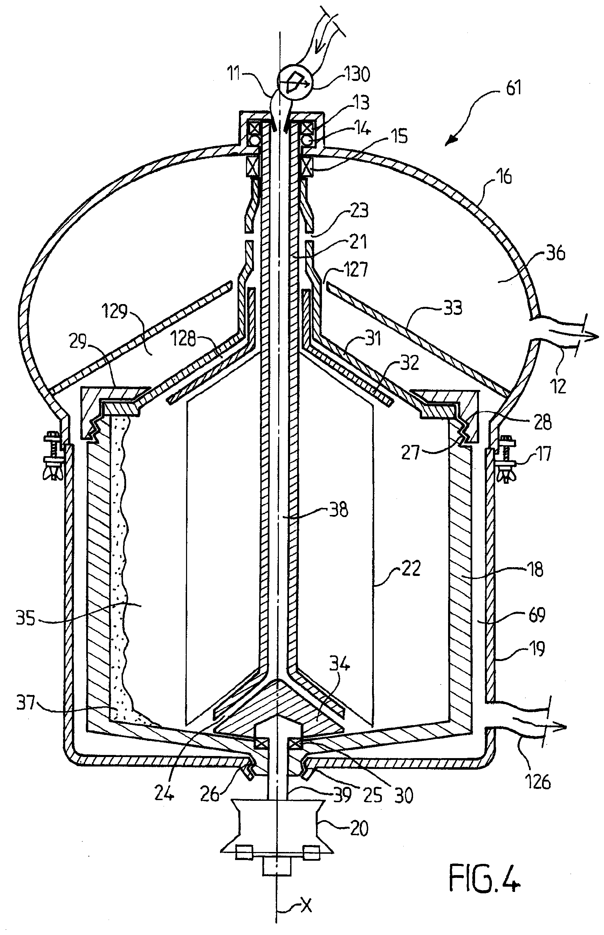

En référence à la figure 4, le séparateur centrifuge 61 de la centrifugeuse 6 va être décrit. L'entrée d'eau sale dans le séparateur centrifuge est permise par un tube 11 d'entrée et une vanne 130 à débit d'injection d'eau variable réglée à 180 L/heure. Par exemple, cette vanne 130 est une vanne à boisseau.

Le séparateur centrifuge 61 représenté sur la figure 3 comprend un bol étanche 18 de forme cylindrique, muni d'un couvercle de bol 31, la partie extérieure du fond du bol comportant un filetage 26 et la partie extérieure au bord supérieur du bol 18 comportant un filetage 27. Le séparateur centrifuge 61 comprend également un gicleur 34 de forme tronconique à la base d'un arbre creux vertical 21 et des ailettes radiales, ou pales verticales 22, par exemple au nombre de 3, s'étendant radialement à partir de ce même arbre vertical 21, réalisés à partir de l'arbre par moulage, par usinage et/ ou soudure. L'espace interne de l'arbre 21 communique de façon étanche avec le tube 11 d'entrée d'eau sale à l'aide de joints 13, 15 adaptés aux grandes vitesses de rotation, par exemple des joints en caoutchouc, avantageusement des joints en copolymère de fluorovinilidène et d'exafluoropropylène, par exemple de la marque viton, entre lesquels est intercalé un roulement à bille 14. Ainsi, le roulement à bille 14 est protégé de toute détérioration due à l'eau. L'arbre creux 21 comporte un conduit central 38 d'amenée de l'eau sale à traiter et, à sa bas le gicleur 34 qui comporte six conduits radiaux 24 de distribution de cette eau sale dans le bol 18.
Les pales verticales 22 assurent, à l'intérieur du bol 18, le brassage de l'eau sale à séparer des boues. La vitesse de rotation du gicleur 34 est avantageusement d'environ 8000 t/min. Le rayon des pales 22 est inférieur à celui du bol 18, par exemple, le rayon d'une pale est de 55mm, et le diamètre intérieur du bol 18 est de 116mm. Par exemple, la hauteur du bol est de 90mm, et donc inférieure au diamètre du bol 18.
Le séparateur centrifuge 61 comprend en sus un disque tronconique de séparation 32 dont le centre se prolonge en goulot cylindrique coaxial à l'arbre vertical 21. Le disque tronconique de séparation 32 est ainsi intercalé entre les pales verticales 22 et le couvercle de bol 31, afin de permettre une remontée de l'eau du bol 18 jusqu'au goulot. Le disque tronconique de séparation 32 est lisse sur sa surface, de façon à ne pas freiner l'eau sur son trajet.
Le couvercle de bol 31 est lui-même de forme tronconique, présentant également un goulot cylindrique coaxial à l'arbre vertical, à la périphérie duquel sont ménagés des orifices circulaires 23. Les orifices 23 sont avantageusement au nombre de 26.
Ces différentes pièces sont assemblées à l'intérieur d'un caisson étanche 19 fermé par un couvercle 16. Le séparateur centrifuge 61 présente ainsi deux chambres. L'ensemble des orifices 23 constitue un passage de l'eau de la première chambre 35 à la seconde chambre 36. La première chambre, dans le caisson étanche 19, est une chambre de séparation 35 destinée à recueillir sur sa paroi les boues 37 et les matières en suspension de densité supérieure à celle de l'eau. La seconde chambre, formée par le couvercle 16, est une chambre de recueillement 36 de l'eau claire communiquant avec un tuyau d'évacuation de l'eau claire 12. Cette chambre de recueillement 36 reçoit l'eau séparée des boues qui sort du séparateur centrifuge par des orifices circulaires 23. Le couvercle 31 du bol 18, surmonté d'une coiffe 33, forme la séparation entre ces deux chambres.
Le couvercle 31 est maintenu sur le bol 18 par un anneau de blocage 29 comportant un filetage 28 correspondant au filetage du bord extérieur supérieur du bol 18.
Le fond du bol 18 peut se fixer au fond du caisson 19 par vissage de la vis 26 prolongeant le fond du bol 18 dans le filetage adapté 25 porté par le caisson étanche 19.
Un orifice cylindrique est ménagé à l'intérieur de la vis 26 du fond du bol 18, de façon à recevoir un arbre menant 39 portant une poulie 20 entrainée par l'intermédiaire d'une courroie reliée au moteur 63.
L'arbre menant 39 est solidaire en rotation de l'arbre 21 par l'intermédiaire d'un pion d'entraînement ou de tout autre moyen adapté.
Le couvercle 16 du caisson étanche 19 est fixé à ce caisson par des moyens de fixation appropriés, par exemple par des charnières et grenouillères 17. L'étanchéité de l'ensemble du système de séparation centrifuge est assurée par des joints d'étanchéité, tels que ceux représentés en 13, 15 et 30.

L'eau sale à traiter est amenée sous pression avec un débit de 180 L/h par le tube d'entrée 11, arrive dans le bol 18 par les conduits radiaux 24 ; les boues 37, hydrocarbures et biocides de densité supérieure à la densité de l'eau se déposent le long des parois du bol par la force centrifuge ; l'eau séparée des boues sort alors du bol 18 par le trajet intérieur 128 ménagé entre le disque tronconique de séparation 32 et le couvercle 31, car elle est projetée par centrifugation sur le couvercle 31. Elle remonte à la verticale le long du goulot et arrive alors dans la chambre 36 via les orifices circulaires 23 d'où elle est soutirée par aspiration jusqu'au tuyau d'évacuation de l'eau claire 12.
L'interstice entre le couvercle de bol 31 et la coiffe 33 forme une interchambre 129 communiquant avec le récupérateur de drain 69. La coiffe 33 laisse un jour 127 autour du couvercle de bol 31. Ce jour 127 permet l'échappement de l'eau lors de l'arrêt de la rotation du séparateur centrifuge 61. En effet, le bol 18 est plein au démarrage lorsqu'il est à l'arrêt. En effet, avant la mise en marche du dispositif, il est indispensable de remplir le bol 18 d'une certaine quantité d'eau, pour éviter l'usure prématurée des pales de la pompe rotor 62, tournant à sec jusqu'au remplissage du bol 18. L'eau contenue dans le bol au démarrage est aspirée dans la chambre 36 via le trajet intérieur 128 lors d'une montée en débit instantanée au démarrage de la pompe à rotor 62. Le jour 127 permet à cette eau de s'échapper par le drain car la force centrifuge n'est pas suffisante pour l'évacuer radialement via les orifices circulaires 23.

Pour le nettoyage du dispositif, il suffit de dévisser les charnières et grenouillères 17 maintenant le couvercle 16 au caisson 19, de soulever verticalement l'ensemble le couvercle 16 guidé par une charnière à fenêtre et de le faire basculer. On peut alors dévisser l'anneau de blocage 29 du bol 18, retirer le couvercle de bol 31 puis le disque tronconique de séparation 32. On peut alors enlever facilement l'arbre 21 du bol 18. Cet arbre constitué uniquement d'éléments fixes peut être aisément nettoyé et remonté sans risques d'erreurs. Le bol 18 et l'arbre 21 sont avantageusement constitués en acier inoxydable.

La récupération des boues collectées par le séparateur centrifuge 61 est effectuée régulièrement en ouvrant et en curant le bol 18 du séparateur dans lequel elles s'accumulent. Les boues très concentrées sont stockées dans un bac. Après séchage, ces boues ainsi récupérées ne présentent qu'un faible poids et volume, environ 10 kg pour 100 bateaux carénés. L'étape de récupérer les boues par le séparateur centrifuge 61 permet de limiter le colmatage de tous les filtres situés en aval de la centrifugeuse 6 et augmente donc leur durée de vie.

En référence à la figure 5, une pompe à rotor 62 de la centrifugeuse 6 va être décrite.
La pompe à rotor 62 est équipée d'un logement cylindrique 115 délimité par une cloison 118 dans lequel est logé un rotor 117 à ailettes 116, d'une entrée 112 et d'une sortie 113. L'entrée 112 et la sortie 113 traversent la cloison 118 de part et d'autre du rotor 117. Le diamètre du rotor 117 est ajusté à celui du logement cylindrique 115. Le rotor 117 est mobile en rotation dans le logement cylindrique. Le rotor 117 est solidaire en rotation avec un arbre menant 114 par l'intermédiaire d'encoches. L'arbre menant 114 est entrainé à 1800 tr/minute par une poulie, elle-même entraînée par le même moteur 63 que celui du séparateur centrifuge 61, tel que décrit dans la figure 3. Pour améliorer la rotation et l'étanchéité de la pompe à rotor 62, deux jeux de roulement à bille et des rondelles étanches ont été enfilées sur l'arbre menant 114 à la base du logement cylindrique 118.
La pompe à rotor 62 se désamorce automatiquement lorsque la pression excède environ 1,4 bar. En effet, les pales 116 sont souples et s'effacent lorsque la pression est supérieure à environ 1,4 bar. Quand c'est le cas, la pompe 62 ne débite sensiblement plus. Cette valeur de pression d'arrêt de la station de traitement égale à environ 1,4 bar sert d'indicateur du fait que les filtres tubulaires sont encrassés et doivent être changés. Ainsi, le débit de la station de traitement est variable et proportionnel à l'encrassement des filtres, c'est-à-dire que le débit baisse avec l'encrassement des filtres. En effet, la fuite interne de la pompe 62 augmente progressivement. Ainsi, l'arrêt en débit de la pompe 62 se produit lorsque les filtres ne sont plus efficaces, de façon à éviter les rejets d'eau polluée en sortie de la station de traitement 20.
La pompe à rotor 62 permet de créer une aspiration diphasique eau/air. En effet, la pompe à rotor 62 est conçue pour avoir un fort débit plus élevé que le débit de la pompe 106. Par exemple, la pompe à rotor 62 présente un débit de 500L/h, très supérieur à celui de la pompe 106 qui est de 180L/h.
D'une part, ce fort débit permet d'éviter que le bol 18 se vide dans le drain 69, et d'autre part, ce fort débit a pour effet de créer une aspiration diphasique eau/air à travers le séparateur centrifuge 61 et le drain 126. Ainsi, la pompe à rotor 62 créé une aspiration suffisante pour que des poches d'air soit aspirées et se mélangent à l'eau. C'est donc un mélange diphasique d'eau et d'air qui est aspiré en sortie du séparateur centrifuge 61 et refoulé en aval de la pompe 62. Pour permettre cette aspiration d'eau et d'air, le rotor est avantageusement choisi en caoutchouc. Avantageusement, le caoutchouc choisi pour le rotor 117 sera un caoutchouc résistant aux hydrocarbures et à l'eau de mer. Par exemple, du caoutchouc de la marque néoprène convient pour la réalisation de la pompe à rotor 62. Ainsi, l'eau sale est oxygénée dans le séparateur centrifuge 61 et tout au long du trajet dans la station de traitement 20 grâce à l'aspiration d'air créée par la pompe à rotor 62 via le drain 126.
Cette dernière caractéristique permet d'obtenir une eau en sortie de la station de traitement qui présente des valeurs de Demande Chimique en Oxygène DCO et de Demande Biologique en Oxygène DBO très faibles.

En référence à la figure 6, un étage de filtres 7 tubulaires en fibres, par exemple de coton, va être décrit. Cet étage de filtre est contenu dans une cuve 53 qui comporte deux chambres 124, 125. La première chambre 125 reçoit de l'eau sale par une entrée d'eau 51. La seconde chambre reçoit de l'eau nettoyée puis l'expulse via une sortie d'eau 52.

Une dizaine de filtres, par exemple quatorze filtres tubulaires 57 sont vissés dans la paroi séparatrice 54 entre les deux chambres 124, 125, à l'aide de pas de vis coopérant 55 et 56. Ces filtres tubulaires sont constitués de tubes métalliques 58 perforés de 5 à 10 trous sur leur paroi cylindrique et bouchés et étanchéifiés à une de leur extrémité. L'autre extrémité est celle qui est vissée et débouche dans la seconde chambre 124.

Ces filtres tubulaires 57 sont fabriqués par assemblage entre le tube métallique 58 et une gaine tubulaire 59 en coton prise en sandwich axialement entre deux joints toriques d'étanchéités 60, 66 qui évitent que l'eau souillée échappe à la filtration des filtres tubulaires montés dans la cuve 53. La gaine tubulaire 59 est par exemple constituée d'une pile de disques de coton, par exemple des produits disponibles dans le commerce pour un usage cosmétique démaquillants, poinçonnés en leur centre. Le premier joint torique d'étanchéité 60 est destiné à être en butée de la paroi séparatrice 54 et le second joint torique d'étanchéité 66 est enfilé sur le tube 58 entre un ressort 64 et la gaine tubulaire 59. Le ressort est maintenu autour du tube 58 selon une compression choisie 120 à l'aide d'un écrou papillon 65 facilitant le choix de compression par serrage de l'écrou par le mécanicien du chantier. Plus la compression du ressort 64 est grande sur les disques de cotons, plus grande est la compression axiale s'exerçant sur la gaine tubulaire 59 donc plus la maille de filtration sera fine.

Les deux chambres 124 et 125 sont séparées et étanchéifiées par une pâte 121. La seconde chambre 124 sert à collecter l'eau qui a traversé les filtres tubulaires 57. Le trajet de l'eau est symbolisé par des flèches en tirets, telle que la flèche 123. La pompe à rotor 62 en amont de la cuve 53 exerce une pression radiale 122 sur les filtres. Ainsi, l'eau de la première chambre 125 traverse radialement le tube de disques de cotons empilés par l'extérieur vers l'intérieur via les perforations du tube métallique 58 et sort par l'extrémité ouverte du tube 58 dans la seconde chambre 124. Ainsi, la surface portante du coton des filtres tubulaires 57 vue par l'eau qui traverse les perforations du tube métallique 58 est grande proportionnellement à la surface des perforations.

La station de traitement comprend deux étages de ces filtres tubulaires montés en série. Les filtres tubulaires 57 du second étage de filtres subissent une compression axiale de la part du ressort 64 inférieur, par exemple deux fois moindre que les filtres tubulaires 57 du premier étage de filtres car l'écrou papillon 65 a été moins vissé par l'opérateur, de façon à obtenir un débit identique sur les deux étages de filtres tubulaires 7 et 8. En effet, la pression en amont du premier étage 7 de filtres tubulaires est supérieure à la pression en aval du premier étage 7 de filtres tubulaires, donc supérieure à la pression en amont du second étage 8 de filtres.
La pression radiale 122 des filtres tubulaires 57 s'auto-régule car plus la gaine tubulaire 59 en coton est chargée des impuretés qu'elle a filtré lors de précédentes filtration, plus la pression radiale 122 qui s'exerce augmente à cause des impuretés qui réduisent le débit en faisant obstacle à l'eau traversant la gaine tubulaire 59. Le ressort 64 se détend alors pour compenser en augmentant la maille de filtration de la gaine tubulaire 59. Ainsi, la pression exercée par la compression axiale 120 du ressort 64 et la pression 122 exercée par la pompe à rotor et les impuretés filtrées ajustent automatiquement la maille de filtration de la matière fibreuse pour conserver un débit quasiment constant. La pression est de 1,2 bar en fin de filtration en bas du premier étage 7 de filtre en coton.
En fin de filtration, environ 500 g de résidu stagne au fond de la première chambre 125.
La gaine tubulaire 59 de chaque filtre tubulaire 57 doit être remplacée tous les 35 à 40 m³ d'eau sale filtrée, soit tous les 70 bateaux carénés. Le remplacement de la gaine tubulaire 59 consiste à poinçonner de nouveaux disques de coton en leur centre, à dévisser l'écrou 65 de façon à retirer le ressort 64 et le joint torique 66 du tube 58 afin d'extraire la gaine tubulaire 59 usée et la remplacer par l'empilement des nouveaux disques de coton. Ainsi, le coût de ces filtres tubulaires 57 est faible.
Ces filtres à coût réduits allongent la vie des filtres 9, 10 sur lit de charbons actifs placés en aval car ils contribuent à en éviter le colmatage. Ainsi, les filtres sur lit de charbons actifs 9, 10 doivent être changés cinq fois moins souvent que les filtres tubulaires 57. Le traitement des déchets de la chaine de filtration 1 de la figure 1 consiste en l'incinération des boues sèches issues de la centrifugeuse 6 qui sont extraites environ toutes les 60h de fonctionnement, ainsi qu'à l'incinération de gaines 59 usées également sèches. Aucun résidu liquide n'est à recycler. Le procédé de traitement et de dépollution de l'eau usée ne présente pas d'odeurs particulières grâce à l'oxygénation de l'eau usée par la centrifugeuse 6 placée au début de la station de traitement 20. Ainsi, le traitement des déchets de traitement de carénage consiste principalement en le transport et l'incinération de déchets secs et compacts. Ce traitement des déchets a donc un coût réduit. Ainsi, l'action combinée de la centrifugeuse 6 et des filtres tubulaires 57 permettent de diviser par 10 le coût de maintenance annuel de la chaine de traitement des eaux de carénage complète, comparativement aux chaines de traitement de l'eau de carénage préexistantes.

Dans un autre mode de réalisation, les deux étages de filtres tubulaires en coton sont montés en parallèle. L'eau résultant de cette filtration est alors chargée en boues à 20mg/L au lieu de 5 mg/L quand les deux étages sont montés en série.

Dans un autre mode de réalisation, les filtres tubulaires en matière fibreuse sont dans une autre matière que le coton. On peut utiliser notamment pour cela l'une des matières suivantes ou des associations de matières suivantes : bois, liège, papier, coton, bambou, polyester, viscose, soie, mohair, laine, poils, cuir, feutre, non-tissé, textile, mousse, polystyrène, tulle, gaze, plumes, nanofibres, pierre ponce, argile ou n'importe quelle matière poreuse dont la porosité est jugée compatible avec le diamètre des impuretés à filtrer.
Dans un autre mode de réalisation, le rotor 117 de la pompe 62 à rotor coopère avec l'arbre menant par l'intermédiaire de cannelures, de méplats ou de tout autre moyen.
D'autres précisions sur la centrifugeuse sont disponibles dans le brevet FR-A-2551363, dans lequel certains des orifices circulaires ont été supprimés.
Dans un autre mode de réalisation, des étages de filtration supplémentaires sont ajoutés en combinaison sur le trajet de l'eau usée, en amont ou en aval de la centrifugeuse, en amont ou en aval d'un étage 7 ou 8 de filtres tubulaires en coton, ou en amont ou en aval d'un étage 9 et 10 des étages de filtres à charbon actif. Les étages de filtration supplémentaires peuvent être des grillages, des filtres tamis, des filtres à résines zéolithe, des filtres lamellaires, des filtres à particules, des filtres à coalescence, des filtres sur substrat de granulat poreux à échanges ioniques, des tamis moléculaires, du sable et du gravier, des filtres à membrane céramique, des filtres à électrocoagulation ou tout autre type de filtres.
Dans un autre mode de réalisation, le second étage 8 de filtres tubulaires en coton est supprimé.
Dans un autre mode de réalisation, le second étage 10 de filtres à charbon actif est supprimé. Dans un autre mode de réalisation, le capillaire de dépressurisation débouche, en aval de l'électrovanne 133, dans la cuve tampon 5 ou dans le débourbeur 4, ou encore sur la dalle 2 du chantier de carénage.
Le nombre d'étages de filtration, les vitesses de rotation du moteur, du rotor de la pompe à rotor et du séparateur centrifuge, le débit et la pression des pompes, le nombre de filtres tubulaires fibreux, le volume des différentes cuves de la chaine de traitement des eaux, le volume de l'armoire de la station de traitement, les fréquences de remplacement des filtres ou de vidange des différents éléments de la chaine de traitement sont décrits à titre d'exemples illustratifs et peuvent être augmentés ou diminués sans modifier le fonctionnement général de la chaine de traitement de l'eau usée.
Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention. En outre, elle peut s'appliquer au traitement des eaux usées dans d'autres domaines d'application que les aires de carénages, par exemple des aires techniques de garages automobiles, les stations d'épuration, les stations de traitement de l'eau usée urbaine, de l'eau de brasserie, de l'eau de l'industrie laitière et de l'eau usée des blanchisseries industrielles. En particulier, elle peut s'appliquer au traitement des eaux usées dans les domaines d'application suivants : dépollution des eaux de nettoyage des caves viticoles, traitement des pesticides des eaux de nettoyage des poulaillers, dépollution des eaux de lavage des entrepôts des grossistes vendeurs de fruits.
L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Dans les revendications, tout signe de référence entre parenthèses ne saurait être interprété comme une limitation de la revendication.

**Tableau 1 : Analyse de l'eau de carénage en sortie de la chaîne de traitement pour un volume journalier de 180 L par heure.**

| **Paramètres** | **Rejet station** | | | **Valeurs guides** | | |
|---|---|---|---|---|---|---|
| pH | 6.8 | | | 5.5-8.5 | | |
| Matières en suspension (MES) | | 5.8 | mg/L | < | 100 | mg/L |
| Charge de pollution organique | | | | | | |
| Demande chimique en oxygène (test DCO) | < | 30 | mg O₂/L | < | 300 | mg O₂/L |
| Demande biologique en oxygène sur 5 jours (test DBO5) | | 4 | mg O₂/L | < | 100 | mg O₂/L |
| Azote Kjeldhal total organique et ammoniacal (test NTK) | | 1.7 | nng/L | | - | |
| Hydrocarbures totaux | | 0.41 | mg/L | < | 10 | mg/L |
| Métaux lourds totaux (Al+As+Pb+Zn+Ni+Cd+Cu+Cr+Fe+Mn+Sn) | < | 0.99 | mg/L | < | 15 | mg/L |
| Fer et aluminium (Fe+ Al) | | 0.31 | mg/L | < | 5 | mg/L |
| Aluminium (Al) | | 0.083 | mg/L | | - | |
| Arsenic (As) | < | 0.01 | mg/L | < | 0.05 | mg/L |
| Plomb (Pb) | < | 0.01 | mg/L | < | 0.5 | mg/L |
| Zinc (Zn) | | 0.34 | mg/L | < | 2 | mg/L |
| Nickel (Ni) | < | 0.01 | mg/L | < | 0.5 | mg/L |
| Cadmium (Cd) | < | 0.001 | mg/L | | - | |
| Cuivre (Cu) | | 0.28 | mg/L | < | 0.5 | mg/L |
| Chrome (Cr) | < | 0.01 | mg/L | < | 0.5 | mg/L |
| Fer (Fe) | | 0.23 | mg/L | | - | |
| Manganèse (Mn) | | 0.007 | mg/L | < | 1 | mg/L |
| Etain (Sn) | < | 0.01 | mg/L | < | 2 | mg/L |
| Mercure (Hg) | < | 0.2 | µg/L | | - | |
| Micropolluants organiques | | | | | | |
| Hydrocarbures Aromatiques Polycycliques HAP (16 composés) | < | 0.05 | µg/L | < | 0.05 | mg/L |
| Polychlorobiphényles PCB (7 congénères) | < | 0.01 | µg/L | < | 0.05 | mg/L |
| Composés organo halogènes volatils COHV (17 composés) | < | 16 | µg/L | | | |
| Halogène organique adsorbable (AOX) | | 39 | µg/L | | | |
| Tributylétain cation | | 0.38 | µg/L | < | 1.5 | mg/L |
| Atrazine | < | 0.02 | µg/L | | | |
| Simazine | < | 0.02 | µg/L | | | |
| Diuron | | 0.074 | µg/L | < | 2.5 | µg/L |
| Isoproturon | < | 0.02 | µg/L | | | |
| Matières inhibitrices | Non toxique | | | | 100 | |

**Tableau 2 : Concentrations minimale et maximale des boues, métaux et biocides avant traitement par la chaine de traitement décrite précédemment, mesurées sur des chantiers de carénage.**

| **paramètres avant traitement (mg/L)** | **concentration minimale** | **concentration maximale** |
|---|---|---|
| Matières en suspension (MES) | 34 | 397 |
| Demande biologique en oxygène sur 5 jours après 2h de décantation (test DBO5ad2 | 6,42 | 86 |
| Demande chimique en oxygène après 2h de décantation (test DCO ad2) | 35 | 434 |
| Matière Oxydable après 2h de décantation (test MOad2) | 16 | 203 |
| Demande biologique en oxygène sur 5 jours (test DBO5eb | 6,69 | 91 |
| Demande chimique en oxygène (test DCOeb) | 39 | 518 |
| Azote Kjeldhal organique (test NK) | 1,50 | 31 |
| Dioxyde d'azote (NO2) | 0,0137 | 0,3133 |
| Nitrate (NO3) | 1,09 | 11 |
| Ammonium (NH4) | 0,0000 | 2,73 |
| Chlorures | 37 | 1244 |
| Phosphore (P) | 0,2671 | 4 |
| Arsenic (As) | 0,0000 | 0,0197 |
| Plomb (Pb) | 0,0009 | 0,1936 |
| Zinc (Zn) | 0,4415 | 33 |
| Nickel (Ni) | 0,0055 | 0,1076 |
| Cuivre (Cu) | 0,6372 | 27 |
| Chrome (Cr) | 0,0037 | 0,0537 |
| Cadmium (Cd) | 0,0006 | 0,0455 |
| Fer (Fe) | 1,14 | 16 |
| Aluminium (Al) | 0,6295 | 8.27 |
| Détergents | 0,0651 | 0,6199 |
| Indice phénol | 0,0062 | 0,7522 |
| Indice Hydrocarbures | 0,6511 | 9,09 |
| Matières inhibitrices (MI) | 0,0000 | 92 |
| Matières volatiles en suspension (MVS) | 12 | 159 |
| Toluène | 0,0000 | 0,2802 |
| Xylène | 0,0004 | 0,2500 |
| Benzène | 0,0000 | 0,0574 |
| Ethylbenzène | 0,0000 | 0,0354 |
| Diuron | 0,0120 | 0,8385 |
| Di (2 -ethy 1 hexy) phtalate | 0,0022 | 0,2116 |
| chloroforme | 0,0000 | 0,0182 |
| Lindane | 0,0000 | 0,0107 |
| chlonophénols | 0,0000 | 0,0188 |

## Revendications

1. Unité de traitement et de dépollution de l'eau usée (20) comprenant :
- une entrée de l'unité de traitement (41) pour recevoir de l'eau usée,
- un séparateur centrifuge (61) comprenant
un bol (18) de recueillement des boues et une chambre de recueillement de l'eau (36),
un gicleur (34) monté mobile en rotation à l'intérieur du bol incluant une entrée de gicleur (11) et une sortie de gicleur (24), l'entrée de l'unité de traitement (41) communiquant avec l'entrée de gicleur (11),
la sortie du gicleur (24) débouchant dans le bol (18) de recueillement des boues,
un couvercle (31) de bol séparant le bol de recueillement des boues de la chambre de recueillement de l'eau, un canal (23) traversant le couvercle de bol pour rejeter l'eau débarrassée des boues dans la chambre de recueillement de l'eau,
une sortie (12) du séparateur centrifuge communiquant avec la chambre de recueillement de l'eau, le séparateur centrifuge étant apte à séparer l'eau usée des boues qu'elle contient par centrifugation de l'eau chargée des boues présentant une densité supérieure à celle de l'eau sur les parois du bol de recueillement des boues,
- une pompe de refoulement (62) pour aspirer l'eau traversant le séparateur centrifuge (61), comprenant une entrée de pompe et une sortie de pompe, l'entrée de pompe étant reliée à la sortie du séparateur centrifuge,
- un dispositif de filtration (7, 8, 9, 10) comprenant une entrée du dispositif de filtration, l'entrée du dispositif de filtration étant reliée à la sortie de pompe,
- une sortie de l'unité de traitement (42) étant reliée à la sortie du dispositif de filtration,
- une pompe d'alimentation (106) alimentant en eau l'entrée de l'unité de traitement (41) à un débit d'alimentation, dans laquelle la pompe de refoulement (62) aspire l'eau à un débit de refoulement,
dans laquelle le débit d'alimentation est inférieur au débit de refoulement, afin que la pompe de refoulement (62) aspire à la fois de l'eau et de l'air à travers le séparateur centrifuge (61).

2. Unité selon la revendication 1, dans laquelle le dispositif de filtration comprend un premier filtre (57) comprenant de la matière fibreuse.

3. Unité selon la revendication 2, dans laquelle le premier filtre (7) comprend un premier tube (58) ayant une paroi cylindrique perforée et une première extrémité ainsi qu'une seconde extrémité, et la matière fibreuse formant une gaine tubulaire fibreuse (59) autour du tube.

4. Unité selon la revendication 3, dans laquelle la gaine tubulaire fibreuse (59) comprend un empilement de disques coaxiaux de matière fibreuse poinçonnés en leur centre et enfilés sur le tube (58).

5. Unité selon la revendication 3 ou 4, dans laquelle le premier filtre comprend un premier dispositif de compression axiale (65) exerçant une force de compression axiale sur la gaine tubulaire fibreuse à la première extrémité du premier tube, la première extrémité du premier tube étant bouchée de manière étanche, la gaine tubulaire fibreuse étant en butée sur une première rondelle (60) enfilée sur la seconde extrémité du premier tube, la seconde extrémité du premier tube étant ouverte pour constituer un canal de passage de l'eau.

6. Unité selon la revendication 5, dans laquelle le premier dispositif de compression axiale comporte un ressort comprimé entre d'une part une seconde rondelle (66) en butée de la gaine tubulaire fibreuse et d'autre part une vis de serrage pour ajuster de la compression.

7. Unité selon la revendication 5 ou 6, dans laquelle le dispositif de filtration comprend deux chambres (124, 125) séparées par une cloison (54) percée d'un trou dans lequel est fixé (55, 56) la seconde extrémité du premier tube constituant canal de passage d'eau, la première rondelle (60) enfilée sur la seconde extrémité du premier tube étant comprimée entre la cloison et la gaine tubulaire fibreuse, de façon à ce que la première chambre communique avec la seconde chambre par l'intermédiaire du filtre, l'eau passant de la première chambre à la seconde en traversant radialement la gaine tubulaire fibreuse de l'extérieur vers l'intérieur (123) via les perforations du premier tube, puis l'eau traversant le premier tube axialement jusqu'à déboucher dans la seconde chambre (124) via la seconde extrémité du premier tube constituant canal de passage d'eau.

8. Unité selon l'une quelconque des revendications 1 à 7, dans laquelle la pompe de refoulement (62) est une pompe à plateau oscillant.

9. Unité selon l'une quelconque des revendications 2 à 8, dans laquelle le dispositif de filtration comprend un filtre (9) comprenant du charbon actif (67) en aval du premier filtre.

10. Unité selon l'une quelconque des revendications 2 à 9, dans laquelle le dispositif de filtration comprend un filtre ultra-violet en aval du filtre (9) comprenant du charbon actif (67).

11. Unité selon la revendication 10, dans laquelle le dispositif de filtration comprend une pompe doseuse de produit désinfectant en aval du filtre ultra-violet.

12. Conteneur mobile (20) contenant l'unité de traitement selon l'une quelconque des revendications 1 à 11.

13. Système de traitement comprenant une l'unité de traitement selon l'une quelconque des revendications 1 à 12 et un débourbeur (4) et/ou une cuve de décantation (5) disposé en amont de l'unité de traitement (20).

14. Système de traitement selon la revendication 13, le système de traitement comprenant en outre
une vanne trois-voies (49) en aval de la pompe de refoulement,
la première voie étant reliée à la sortie de la pompe (62), la seconde voie étant reliée à l'entrée du dispositif de filtration (7) et la troisième voie débouchant dans la cuve de décantation (44, 5),
la vanne trois-voies permettant de relier sélectivement la première voie avec l'une des deuxième voie ou troisième voie de façon exclusive,
pour permettre quand la vanne trois-voie relie la première voie avec la seconde voie de procéder à un traitement des eaux usées, et quand la vanne trois-voie relie
la première voie avec la troisième voie, introduire de l'eau de nettoyage dans la cuve de décantation, de façon à ce que l'eau de nettoyage circule alors en circuit fermé entre la cuve de décantation (5) et le séparateur centrifuge (61) qui en extrait les boues.

15. Procédé de traitement et de dépollution de l'eau comprenant
collecter l'eau usée dans une cuve de décantation (5) en amont de l'unité de traitement (20) selon l'une quelconque des revendications 1 à 10, envoyer l'eau sous pression au débit d'alimentation dans l'unité de traitement (20) dont la pompe de refoulement (62) engendre une pression hydraulique poussant l'eau à traverser le dispositif de filtration (7, 8, 9, 10) au débit de refoulement et dont le séparateur centrifuge (61) sépare l'eau usée des boues qu'elle contient par centrifugation de l'eau chargée des boues présentant une densité supérieure à par celle de l'eau sur les parois du bol (18) de recueillement des boues, le débit d'alimentation étant inférieur au débit de refoulement, afin que la pompe de refoulement aspire à la fois de l'eau et de l'air à travers le séparateur centrifuge.

## Patentansprüche

1. Einheit zur Behandlung und Reinigung von Abwasser (20) umfassend:
- einen Eingang der Einheit zur Behandlung (41), um das Abwasser aufzunehmen,
- ein Zentrifugalabscheider (61) umfassend
einen Schlammruhebehälter (18) und eine Wasserruhekammer (36),
eine rotierende Düse (34) im Inneren des Behälters, welche einen Eingang der Düse (11) und einen Ausgang der Düse (24) umfasst, wobei der Eingang der Einheit zur Behandlung (41) mit dem Eingang der Düse (11) zusammenwirkt,
wobei der Ausgang der Düse (24) in den Schlammruhebehälter mündet,
ein Behälterdeckel (31), welcher den Schlammruhebehälter von der Wasserruhekammer trennt, ein Kanal (23), welcher den Behälterdeckel durchquert, um das aus dem Schlamm gesammelte Wasser in die Wasserruhekammer zu leiten,
eine Ausgang (12) des Zentrifugalabscheiders, welcher mit der Wasserruhekammer zusammenwirkt, wobei der Zentrifugalabscheider dazu geeignet ist, den in dem Abwasser enthaltenen Schlamm durch zentrifugieren des mit dem Schlamm belasteten Wassers, welches eine höhere Dichte als das Wasser an den Wänden des Schlammruhebehälters aufweist, zu trennen
- eine Rücklaufpumpe (62), welche das Wasser, welches den Zentrifugalabscheider durchquert, aufsaugt, umfassend einen Pumpeneingang und einen Pumpenausgang, wobei der Pumpeneingang mit dem Ausgang des Zentrifugalabscheiders verbunden ist,
- eine Filtervorrichtung (7, 8, 9, 10) umfassend einen Fitervorrichtungseingang, wobei der Filtervorrichtungseingang mit dem Pumpenausgang verbunden ist,
- eine Ausgang der Einheit zur Behandlung (42), welcher mit dem Filtervorrichtungsausgang verbunden ist,
- eine Zufuhrpumpe (106), welche den Eingang der Einheit zur Behandlung (41) durch einen Versorgungsdurchfluss mit Wasser versorgt, wobei die Rücklaufpumpe das Wasser durch eine Rücklaufdurchfluss ansaugt,
wobei der Versorgungsdurchfluss niedriger als der Rücklaufdurchfluss ist, so dass die Rücklaufpumpe zugleich Wasser und Luft durch den Zentrifugalabscheider (61) ansaugt.

2. Einheit gemäß Anspruch 1, wobei die Filtervorrichtung einen ersten Filter (57), welcher Faserstoffe umfasst, umfasst.

3. Einheit gemäß Anspruch 2, wobei der erste Filter (7) ein erstes Rohr umfasst, welche eine perforierte zylindrische Wand aufweist und einen ersten Endabschnitt sowie einen zweiten Endabschnitt, und wobei der Faserstoff eine faserstoffartige röhrenförmige Ummantelung (59) um das Rohr bildet.

4. Einheit gemäß Anspruch 3, wobei die faserstoffartige röhrenförmige Ummantelung (59) einen Stapel koaxialer Faserstoffscheiben, welche in ihrer Mitte gelocht sind und auf die Röhre (58) aufgezogen sind, umfasst.

5. Einheit gemäß Anspruch 3 oder 4, wobei der erste Filter eine axiale Kompressionsvorrichtung (65) umfasst, welche eine axiale Kompressionskraft auf die faserstoffartige röhrenförmige Ummantelung am ersten Endabschnitt der ersten Röhre ausübt, wobei der erste Endabschnitt der ersten Röhre dicht verschlossen ist, wobei die faserstoffartige röhrenförmige Ummantelung im Anschlag auf einer ersten Scheibe (60), welche auf dem zweiten Endabschnitt der ersten Röhre aufgezogen ist, liegt, wobei der zweite Endabschnitt der ersten Röhre offen ist, um einen Wasserdurchflusskanal zu bilden.

6. Einheit gemäß Anspruch 5, wobei die erste axiale Kompressionsvorrichtung eine zusammengedrückte Feder umfasst, welche angeordnet ist zwischen einer auf der faserstoffartigen röhrenförmigen Ummantelung aufliegenden zweiten Scheibe (66) und einer Spannschraube zur Anpassung der Kompression,.

7. Einheit gemäß Anspruch 5 oder 6, wobei die Filtervorrichtung zwei Kammern (124, 125) umfasst, welche durch eine Wand getrennt sind, welche ein Loch aufweist, in dem der zweite Endabschnitt der ersten Röhre, welcher den Wasserdurchflusskanal bildet, angeordnet ist, wobei die erste auf dem zweiten Endabschnitt aufgezogene Scheibe zwischen der Wand und der faserstoffartige röhrenförmige Ummantelung zusammengedrückt ist, so dass die erste Kammer mit der zweiten Kammer Mittels des Filters zusammenwirkt, wobei das Wasser von der ersten Kammer zur zweiten Kammer fließt, indem es die faserstoffartige röhrenförmige Ummantelung von Außen nach Innen durch die Perforierungen der ersten Röhre radial durchläuft, wobei sodann das Wasser die erste Röhre über den zweiten Endabschnitt der ersten Röhren, welcher den Wasserdurchflusskanal bildet, axial durchläuft bis es in die zweite Kammer (124) mündet.

8. Einheit gemäß einem der Ansprüche 1 bis 7, wobei die Rücklaufpumpe (62) eine Taumelscheibenpumpe ist.

9. Einheit gemäß einem der Ansprüche 2 bis 8, wobei die Filtervorrichtung einen Filter (9) umfasst, welcher Aktivkohle (67) umfasst und nachgelagert zum ersten Filter angeordnet ist.

10. Einheit gemäß einem der Ansprüche 2 bis 9, wobei die Filtervorrichtung einen Ultraviolett-Filter umfasst, welcher nachgelagert zum Filter (9), welcher Aktivkohle (67) umfasst, angeordnet ist.

11. Einheit gemäß Anspruch 10, wobei die Filtervorrichtung eine Desinfektionsmitteldosierpumpe umfasst, welche nachgelagert zum Ultraviolett-Filter angeordnet ist.

12. Mobiles Gehäuse (20) umfassend die Einheit zur Behandlung gemäß einem der Ansprüche 1 bis 11.

13. Behandlungssystem umfassend eine Einheit zur Behandlung gemäß einem der Ansprüche 1 bis 12 und eine Läutertrommel (4) und/oder ein Absetzbecken (5), welche der Einheit zur Behandlung (20) vorgelagert angeordnet sind.

14. Behandlungssystem gemäß Anspruch 13, wobei das Behandlungssystem unter anderem umfasst
ein, der Rücklaufpumpe vorgelagertes Dreiwegeventil (49)
wobei der erste Weg mit dem Ausgang der Pumpe (62) verbunden ist, wobei der zweite Weg mit dem Eingang der Filtervorrichtung (7) verbunden ist und der dritte Weg im Absetzbecken (44, 5) mündet,
wobei das Dreiwegeventil es ermöglicht, wahlweise den ersten Weg mit dem zweiten oder dritten Weg in ausschließlicher Art zu verbinden,
um zu ermöglichen, wenn das Dreiwegeventil den ersten Weg mit dem zweiten Weg verbindet, eine Behandlung des Abwassers durchzuführen, und wenn das Dreiwegeventil den ersten Weg mit dem dritten Weg verbindet, Reinigungswasser in das Absetzbecken einzuführen, so dass das Reinigungswasser in einem geschlossenen Kreislauf zwischen dem Absetzbecken (5) und dem Zentrifugalabscheider (61), der den Schlamm aus dem Wasser löst, fließt.

15. Verfahren zur Behandlung und Reinigung von Abwasser umfassend
Sammeln von Abwasser in einem Absetzbecken (5), welches vorgelagert zur Einheit zur Behandlung (20) gemäß einem der Ansprüche 1 bis 20 angeordnet ist, befördern des Wasser unter Druck über den Versorgungsdurchfluss in die Einheit zur Behandlung (20), dessen Rücklaufpumpe (62) einen hydraulischen Druck erzeugt, welcher das Wasser durch die Filtervorrichtung (7, 8, 9, 10) über den Rücklaufdurchfluss schiebt und dessen Zentrifugalabscheider (61) das Abwasser von dem im Abwasser enthaltenen Schlamm trennt durch zentrifugieren des mit dem Schlamm belasteten Wassers, welches eine höhere Dichte als das Wasser an den Wänden des Schlammruhebehälters (18) aufweist, wobei der Versorgungsdurchfluss niedriger als der Rücklaufdurchfluss ist, so dass die Rücklaufpumpe zugleich Wasser und Luft durch den Zentrifugalabscheider ansaugt.

## Claims

1. Wastewater treatment and decontamination unit (20) composed of:
- an inlet on the treatment unit (41) to receive the wastewater,
- a centrifugal separator (61) composed of:
a bowl (18) to collect the sludge and a chamber to collect water (36),
a moving nozzle rotating (34) inside the bowl composed of a nozzle inlet (11) and a nozzle outlet (24), the inlet of the wastewater treatment (41) communicating with the inlet of the nozzle (11),
the nozzle outlet (24) leading to the sludge collecting bowl (18),
a bowl lid (31) separating the sludge collecting bowl from the water collecting chamber, a channel (23) passing through the bowl lid to discard the cleared water into the water collecting chamber,
a centrifugal separator outlet (12) communicating with the water collecting chamber, since the centrifugal separator is able to clear the water from the sludge by centrifuging the wastewater of superior density than the water on the sides of the sludge collecting bowl.
a discharging pump (62) to discharge the water passing through the centrifugal separator (61), composed of a pump inlet and a pump outlet, the pump inlet being linked to the outlet of the centrifugal separator.
a filtration device (7, 8, 9, 10) composed of an inlet that is linked to the pump outlet,
an unit treatment outlet (42) that is linked to the filtration device outlet,
a pump (106) supplying water to the treatment unit inlet (41) at a feed rate in which the pump (62)
sucks the water at a flow rate, the feed rate being inferior to the flow rate so that the pump can suck through the centrifugal separator (61) water and air at the same time,

2. Unit according to claim 1, in which the filtration device comprises a first filter (57) made of fibrous material.

3. Unit according to claim 2 in which the first filter (7) comprises a first tube (58) made of a perforated cylindrical wall, a first and a second extremity and fibrous material forming a fibrous tubular sheath (59) around the tube.

4. Unit according to claim 3 in which the fibrous tubular sheath (59) comprises a stack of coaxial fibrous discs punched at their center and threaded on the tube (58).

5. Unit according to claims 3 or 4, wherein the first filter comprises a first axial compressing device (65) that axially compresses the fibrous tubular sheath at the first end of the first tube, the first end of the first tube is watertight and closed, the fibrous tubular sheath is stopped by a first washer (60) threaded on the second end of the first tube, the second extremity of the first tube is opened to create a water channel.

6. Unit according to claim 5, wherein the first axial compression device comprises a compressed spring between a second washer (66) stopped by the fibrous tubular sheath and a clamping screw to adjust compression.

7. Unit according to claims 5 or 6 wherein the filtration device is composed of two chambers (124, 125) separated by a bulkhead (54) that is pierced with a hole (55, 56) in which is fixed the second extremity of the first tube creating water channel, the first washer (60) is threaded on the second extremity of the first tube and is compressed between the bulkhead and the fibrous tubular sheath so that the first chamber communicates with the second chamber through the filtrer, the water passing through the first chamber to the second by going radially through the fibrous tubular sheath from outside to inside (123) via the perforations on the first tube, and then the water passing axially through the first tube until arriving in the second chamber (124) via the second extremity of the first tube creating a water channel.

8. Unit according to any of claims 1 to 7 wherein the delivery pump (62) is a swash plate pump.

9. Unit according to any of claims 2 to 8 wherein the filtration device comprises a filtrer (9) containing active carbon (67) downstream the first filtrer.

10. Unit according to any of claims 2 to 9 wherein the filtration device includes an ultraviolet filter downstream the filter (9) that contains active carbon.

11. Unit according to claim 10 wherein the filtration device comprises a measuring pump for disinfectant downstream the ultraviolet filter.

12. Mobile container (20) comprising the treatment unit according any of claims 1 to 11.

13. Treatment system comprising a treatment unit according to any of claims 1 to 12 and a scrubber (4) and/or a settling tank (5) disposed upstream the treatment unit (20).

14. Treatment system according to claim 13, the treatment système comprising
a three-way valve (49) downstream the pump,
the first way is linked to the outlet of the pump (62), the second way is linked to the inlet of the filtration device (7) and the third way leads into the settling tank (44, 5),
the three-way valve is able to selectively and exclusively link the first way with any of the second or third way, when the three-way valve links the first way with the second way a wastewater treatment can be completed and when the three-way valve links the first way to the third way inserting cleaning water in the settling tank enables the cleaning water to circulate in a closed circuit between the settling tank (5) and the centrifugal separator (61) that extracts the sludge.

15. Treatment and water decontamination device comprising
wastewater collect in a settling tank (5) upstream the treatment unit (20) according to any of claims 1 to 10, to send under pressure water at a feed rate (20) in the treatment unit in which the pump (62) creates a hydraulic pressure pushing water through the filtration device (7, 8, 9, 10) at a flow rate and in which the centrifugal separator (61) separates water from the sludge it contains by centrifuging the wastewater of superior density of the water on the wall of the collecting bowl (18), the feed rate being inferior to the flow rate so that the pump sucks air and water at the same time through the centrifugal separator.
